# EUROPEAN PATENT SPECIFICATION

(11) **EP 4 109 909 B1**
(45) Date of publication and mention of the grant of the patent: **24.12.2025**
(21) Application number: 21776272.3
(22) Date of filing: 19.03.2021
(51) Int. Cl.: H04N 21/262

(54) **PROGRAM PLAYING METHOD AND APPARATUS**
PROGRAMMWIEDERGABEVERFAHREN UND -VORRICHTUNG
PROCÉDÉ ET APPAREIL DE LECTURE DE PROGRAMME

(30) Priority: 27.03.2020 CN 202010231153
(43) Date of publication of application: 28.12.2022
(73) Proprietor: Huawei Technologies Co., Ltd., Shenzhen, Guangdong 518129, (CN)
(72) Inventor: SUN, Hao, Shenzhen, Guangdong 518129 (CN); DAI, Wenlei, Shenzhen, Guangdong 518129 (CN)
(74) Representative: Isarpatent
(86) International application number: PCT/CN2021/081664
(87) International publication number: WO 2021/190401

(56) References cited:
- CN-A- 101 415 082
- CN-A- 103 561 290
- CN-A- 104 349 184
- CN-A- 106 454 493
- US-A1- 2007 150 926
- US-A1- 2008 256 085
- US-A1- 2009 187 940
- US-A1- 2010 082 725
- US-A1- 2015 052 547
- "Overview of UPnP AV Architecture", INTERNET CITATION, 2 July 2003 (2003-07-02), XP002304266, Retrieved from the Internet <URL:http://www.intel.com/technology/UPnP/doc.htm> [retrieved on 20041105]
- DVB ORGANIZATION: "OIPF-T1-R2-Functional-Architecture-V2_2-2013-05-15.pdf", DVB, DIGITAL VIDEO BROADCASTING, C/O EBU - 17A ANCIENNE ROUTE - CH-1218 GRAND SACONNEX, GENEVA - SWITZERLAND, 23 October 2015 (2015-10-23), XP017850685

## Description

### TECHNICAL FIELD

This disclosure generally relates to the field of communications technologies, and the invention in particular relates to a program playing method and apparatus, as well as a computer-readable storage medium and a computer program product.

### BACKGROUND

Currently, when an operator runs an internet protocol television (IPTV) service, a home gateway device and a set-top box (STB) terminal are required. When a user subscribes to the IPTV service for the first time, the operator provides the STB terminal free of charge. However, if the STB terminal is damaged, the user needs to purchase a new STB terminal. In addition, the operator also needs to collect a large quantity of STB terminals from STB manufacturers for IPTV service distribution and retail.

Therefore, the current IPTV service causes relatively high costs of the operator and relatively high costs for subscribing to and maintaining the IPTV service by the user.

Documents US 2007/150926 A1 (ZUO MINGLEI [CN]) 28 June 2007 (2007-06-28) and US 2015/052547 A1 (ANSLEY CAROL J [US]) 19 February 2015 (2015-02-19) describe examples of conversion between IPTV and DLNA protocols.

### SUMMARY

The object of the present invention is to provide a program playing method and apparatus, as well as a computer-readable storage medium and a computer program product, to resolve problems of relatively high costs of an operator of an IPTV service and relatively high costs for subscribing to and maintaining the IPTV service by a user in the conventional technology. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a program playing method. The method may be performed by a communications device provided in an embodiment of this application. The communications device may be a device including an STB function module and a DMS function module. For example, the method may be applied to a gateway device with an STB function. In the method, the communications device receives a program playing request message sent by using a first transmission protocol. The program playing request message includes a media file identifier associated with a target program channel. The first transmission protocol may be a DLNA protocol. The communications device determines the corresponding target program channel based on the media file identifier, and may send a data stream request message to an IPTV platform by using a second transmission protocol. The data stream request message includes an identifier of the target program channel, and may be used to request the IPTV platform to send a data stream of the target program channel. The second transmission protocol may be an internet protocol television IPTV protocol. After receiving the data stream request message, the IPTV platform may access a server of the target program channel to obtain the data stream, and send the obtained data stream to the communications device. The communications device receives the data stream sent by the IPTV platform by using the second transmission protocol, and sends, by using the first transmission protocol, the data stream to a playing device for play.

In an example, the second transmission protocol may include a real-time transport protocol (RTP), a real-time streaming protocol (RTSP), and an internet group management protocol (IGMP).

Based on the solution, because a function of a gateway and a function of accessing the IPTV platform can be implemented by using the communications device, a user does not need to separately apply for an STB terminal, so that costs of an IPTV operator and costs for subscribing to and maintaining an IPTV service by the user can be reduced.

According to the invention, after being started, the communications device may receive a channel information list sent by the IPTV platform by using the second transmission protocol. The channel information list may include an identifier of a program channel provided by an IPTV service. The communications device may add a media file identifier for an identifier of each program channel in the channel information list, and store a correspondence table between an identifier and a media file identifier of a program channel. Therefore, the communications device may determine, based on the correspondence table, the target program channel corresponding to the media file identifier included in the program playing request message.

Based on the solution, the communications device may receive the channel information list by using the IPTV transmission protocol, add the media file identifier for the identifier of each program channel in the channel information list, and store the correspondence table between an identifier and a media file identifier of each program channel, to implement access to the IPTV platform.

In a possible implementation, the channel information list further includes a server address of each program channel, and the correspondence table also includes the server address of each program channel. The data stream request message sent by the communications device to the IPTV platform may also include a server address of the target program channel, so that the IPTV platform accesses the server address, and obtains the data stream of the target program channel.

Based on the solution, the communications device may determine the server address of each program channel based on the channel information list sent by using the first transmission protocol, and may add the server address of the target program channel to the data stream request message, so that the IPTV platform can obtain the data stream of the target program channel based on the server address.

In a possible implementation, after sending, by using the first transmission protocol, the data stream to the playing device for play, the communications device may further receive a program close instruction message sent by using the first transmission protocol. The program close instruction message may include the media file identifier associated with the target program channel that needs to be closed. The communications device may determine the corresponding target program channel based on the media file identifier. For example, the communications device may determine, based on the correspondence table, the target program channel corresponding to the media file identifier. The communications device may send a program close request message to the IPTV platform by using the second transmission protocol. The program close request message may include the identifier of the target program channel, and the program close request message may be used to request to leave a multicast group of the data stream of the target program channel. After receiving the program close request message, the IPTV platform may remove the communications device from the multicast group of the data stream of the target program channel, so that the communications device does not receive the data stream that is of the target program channel and that is sent by the IPTV platform.

Based on the solution, the communications device may determine, based on the media file identifier in the program close instruction message received by using the DLNA transmission protocol, the target program channel that needs to be closed, and send the program close request message to the IPTV platform by using the IPTV transmission protocol, to close the target program channel.

According to a second aspect according to the invention, the invention further provides a program playing apparatus, which may be configured to perform the operations in any one of the first aspect and the possible implementations of the first aspect. For example, the apparatus may include a module or a unit configured to perform the operations in any one of the first aspect and the possible implementations of the first aspect. For example, the apparatus includes a communications unit and a processing unit.

According to a third not claimed aspect, an embodiment of this application further provides another program playing apparatus. The apparatus may include a transceiver and a processor coupled to the transceiver, and may be configured to perform the operations in any one of the first aspect and the possible implementations of the first aspect.

According to a fourth aspect according to the invention, the invention also provides a computer program product. The computer program product includes computer program code, and when the computer program code is run by a communications unit and a processing unit or a transceiver and a processor of a program playing apparatus, the program playing apparatus performs the method in any one of the first aspect and the possible implementations of the first aspect.

According to a fifth aspect according to the invention, the invention also provides a computer readable storage medium. The computer readable storage medium stores a program, and the program enables a program playing apparatus to perform the method in any one of the first aspect and the possible implementations of the first aspect.

For technical effects that can be achieved in any one of the second aspect to the fifth aspect or any design of any one of the aspects, refer to the technical effects that can be achieved in any one of the first aspect and the designs of the first aspect. Details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a television program playing system according to this application;
FIG. 2 is an example flowchart of a program playing method according to this application;
FIG. 3 is a schematic diagram of an interface of user equipment according to this application;
FIG. 4 is an example flowchart of a program playing method according to this application;
FIG. 5 is a schematic diagram of an interface of user equipment according to this application;
FIG. 6 is a block diagram of a program playing apparatus according to this application; and
FIG. 7 is a block diagram of a program playing apparatus according to this application.

### DESCRIPTION OF EMBODIMENTS

The following describes technical solutions of this application with reference to the accompanying drawings.

Currently, when an operator runs an internet protocol television (IPTV) service, a home gateway device and a set-top box (STB) terminal are required. When a user subscribes to the IPTV service for the first time, the operator provides the STB terminal free of charge. However, if the STB terminal is damaged, the user needs to purchase a new STB terminal. In addition, the operator also needs to collect a large quantity of STB terminals from STB manufacturers for IPTV service distribution and retail. Therefore, the current IPTV service causes relatively high costs of the operator and relatively high costs for subscribing to and maintaining the IPTV service by the user.

If a user does not subscribe to the IPTV service at home, the user may watch a corresponding over the top (OTT) platform television program by using a smart television, or watch a network video by using a mobile terminal or a PC via an OTT client. In the foregoing two methods, videos are transmitted through a network, and obvious freezing often occurs. In addition, both the smart television and the OTT client are bound to an OTT platform, and due to a copyright limitation, program content that can be provided by the smart television and the OTT client may be greatly different from program content provided by an IPTV platform. Main differences are as follows: The OTT platform provides fewer videos on demand and live videos, and has a larger delay when a video goes live on the OTT platform for the first time. In addition, because the mobile terminal is limited by a screen size, the user may be unable to enjoy visual enjoyment brought by large-screen playing.

To resolve the foregoing problems, this application provides a program playing method, to reduce costs of an operator and costs for subscribing to and maintaining an IPTV service by a user. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

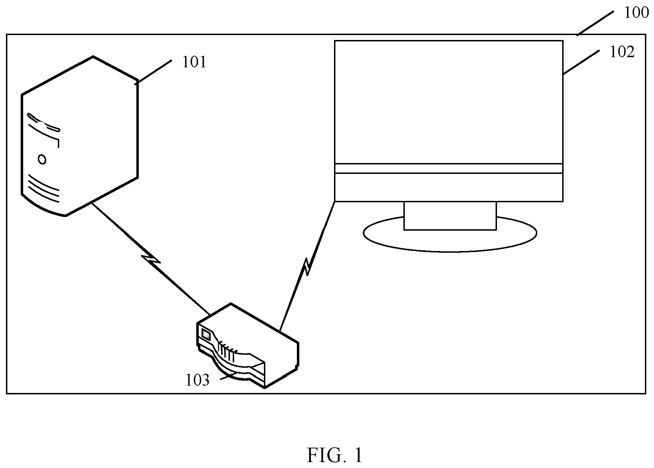

For ease of understanding embodiments of this application, a television program playing system shown in FIG. 1 is first used as an example to describe in detail a network system applicable to embodiments of this application. FIG. 1 is a diagram of a framework of a network system applicable to the program playing method provided in embodiments of this application. The network system 100 includes an IPTV platform 101, a playing device 102, and a communications device 103. It should be understood that the communications device 103 may further include a plurality of components (for example, a processor, a modulator, a multiplexer, a demodulator, or a demultiplexer) related to signal sending and receiving.

The playing device 102 is a device with a function of playing a video file or an audio file or a chip that may be disposed in the device, and the device includes but is not limited to a television (TV), a mobile phone, a tablet computer (Pad), a computer with a wireless transceiver function, a virtual reality (VR) device, an augmented reality (AR) device, and the like. It should be noted that the playing device 102 in this application can support a digital living network alliance (DLNA) technology and protocol.

In the network system 100, the IPTV platform 101 may communicate with a plurality of communications devices (for example, the communications device 103 shown in the figure). The communications device 103 may communicate with a plurality of playing devices (for example, the playing device 102 shown in the figure). The communications device 103 may be a gateway device, an STB, or the like.

The network architecture and the service scenario that are described in FIG. 1 of embodiments of this application are intended to more clearly describe the technical solutions in embodiments of this application, but are not intended to limit the technical solutions provided in embodiments of this application. A person of ordinary skill in the art may know that as the network architecture evolves and a new service scenario emerges, the technical solutions provided in embodiments of this application may be further applied to another similar network system framework.

The word "example" in the following descriptions is used to indicate an example, an illustration, or a description. Any embodiment or design scheme described as an "example" in this application should not be explained as being more preferred or having more advantages than another embodiment or design scheme. Exactly, the word "example" is used to present a concept in a specific manner.

In embodiments of this application, "information", "signal", "message", and "channel" may be interchangeably used sometimes. It should be noted that expressed meanings are consistent when differences are not emphasized. "Of", "relevant", and "corresponding" may be interchangeably used sometimes. It should be noted that expressed meanings are consistent when differences are not emphasized.

It should be understood that FIG. 1 is only an example simplified schematic diagram for ease of understanding. The network system may further include another communications device or another playing device, which is not drawn in FIG. 1.

The communications device in embodiments of this application is a device that may include a set-top box (STB) function module and a digital media server (DMS) function module. The STB function module is configured to provide a video stream or a signal source for the playing device. The DMS function module provides a media sharing capability. Specifically, the DMS function module searches, by using a specific mechanism, for a DMS apparatus or interface module that is on a network and that can match the DMS function module. After a connection succeeds, a subsequent media data transmission action may be performed. A gateway device usually includes the DMS function module. Therefore, the communications device in this application may be a gateway device with an STB function. For example, the STB function may be integrated into a gateway or a gateway-like device. For example, a plug-in integrated with the STB function is loaded into the gateway device, or the STB function may be loaded into the gateway device in a form of a computer program.

To clearly understand the technical solutions provided in embodiments of this application, the following first describes a method for generating a correspondence table between an identifier and a media file identifier of each program channel.

In an example, when a user subscribes to an IPTV service, the communications device initiates an authentication procedure to the IPTV platform after being started. Specifically, the authentication procedure may include the following steps:
(1) The communications device requests a version update from a set-top box version server.
(2) The set-top box version server checks whether a current version of the communications device needs to be updated; and if the version needs to be updated, returns the latest version, so that the version of the communications device is updated; otherwise, notifies the communications device that the version does not need to be updated.
(3) The communications device initiates a login request to an P-CSCF, enters an account and a password, and submits a service authentication request to the proxy-call session control function (P-CSCF) to request the P-CSCF to send the account and the password to an internet protocol multimedia subsystem (IMS) core network.
(4) The IMS core network interacts with a related functional entity, generates a temporary identity certificate and authorization information after authentication on the account and the password succeeds, and notifies an IPTV AS user that the authentication succeeds.
(5) The IMS core network returns an authentication result, the temporary identity certificate, and the authorization information to the P-CSCF, and the P-CSCF generates a new page based on the authentication result, the temporary identity certificate, and the authorization information, and returns the authentication result, the temporary identity certificate, and the authorization information to the communications device.
(6) The communications device updates an electrical program guide (EPG) based on the new page, and records the authorization information and the temporary identity certificate.

It should be understood that the authentication procedure in embodiments of this application may be performed by the STB function module in the communications device.

After the authentication procedure is performed, the STB function module in the communications device may extract a channel information list from the updated EPG. The channel information list may include identifiers of at least two program channels and corresponding server addresses. For example, the channel information list may include channels (for example, CCTV-1) provided by the IPTV platform and server addresses of the channels, as shown in Table 1.

**Table 1: Channel information**

| Identifier of a program channel | Server address |
|---|---|
| Channel 1 | Server address 1 |
| Channel 2 | Server address 2 |
| Channel 3 | Server address 3 |

It should be understood that the channel information list may be received by using a second transmission protocol. The STB function module may send the channel information list to the DMS function module in the communications device. The DMS function module may add a media file identifier for an identifier of each program channel.

In an embodiment, the media file identifier may be a name of a media file of each program channel. For example, the DMS function module may create and store the media file of the identifier of each program channel. It should be noted that no data is stored in the media file herein. The DMS function module may generate, based on an address for storing the media file, a uniform resource locator (URL) address for accessing the media file. The DMS function module may store a correspondence table between an identifier and a media file identifier of each program channel. The correspondence table may include the media file identifier of each program channel, the identifier of the program channel, a server address, and a URL address, as shown in Table 2.

**Table 2: Correspondence table**

| Media file identifier | Identifier of a program channel | Server address | URL address |
|---|---|---|---|
| 001 | Channel 1 | Server address 1 | URL address 1 |
| 002 | Channel 2 | Server address 2 | URL address 2 |
| 003 | Channel 3 | Server address 3 | URL address 3 |

After generating the correspondence table, the DMS function module may send the correspondence table to the playing device and/or user equipment (UE).

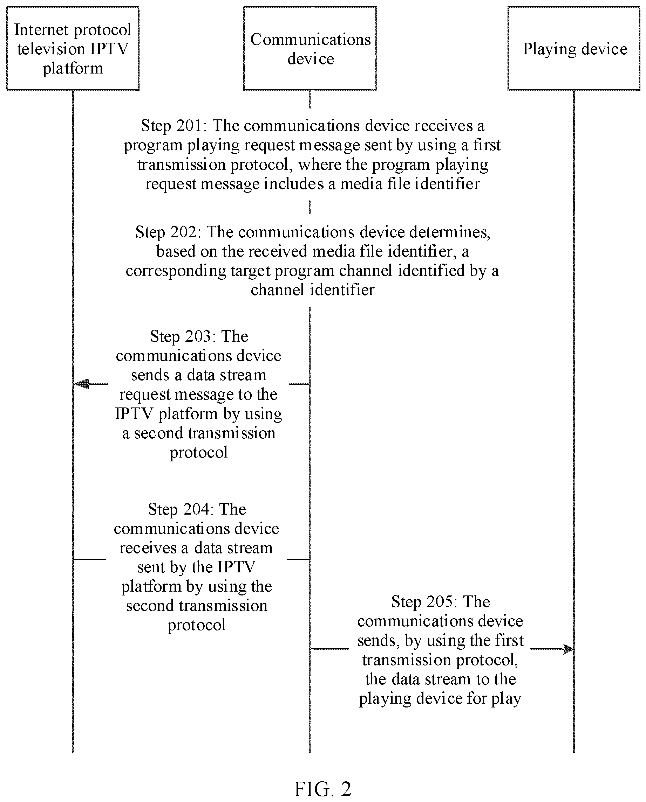

The technical solutions provided in embodiments of this application are described below with reference to the accompanying drawings. FIG. 2 is an example flowchart of a program playing method that is provided in an embodiment of this application and that is shown from a perspective of device interaction. As shown in FIG. 2, the method may include the following steps.

Step 201: A communications device receives a program playing request message sent by using a first transmission protocol.

The first transmission protocol herein may be a DLNA protocol. When receiving the program playing request message, the communications device may parse the program playing request message to obtain information in the program playing request message. The program playing request message may include a media file identifier associated with a target program channel. The target program channel in the program playing request message is a program channel that a user requests to play.

In this embodiment of this application, the program playing request message is sent in the following two methods.

Method 1: The user sends the program playing request message by using a playing device.

The playing device herein may be integrated with a related function of a digital media controller (DMC).

In an example, the user may control, by using a remote control, the playing device to send the program playing request message. For example, the user may select, by using a key on the remote control, a channel that the user wants to watch, and the remote control may detect the pressed key, and then may encode key information in a form similar to a Morse code and then send a radio frequency signal to the playing device. The playing device may determine, based on a correspondence between a radio frequency signal and a program channel, a program channel corresponding to the radio frequency signal, or may determine a media file identifier of the program channel based on a correspondence table between an identifier and a media file identifier of a program channel. Therefore, the playing device may send the determined media file identifier to a DMS function module.

In an embodiment, the program playing request message may be carried in a hypertext transfer protocol (HTTP) request. For example, the playing device may obtain a URL address of the program channel based on the correspondence table between an identifier and a media file identifier of a program channel, and send an HTTP request carrying the URL address to the DMS module in the communications device, to request to access a corresponding media file.

In another example, the user may control, by using a key of the playing device, the playing device to send the program playing request message. For example, the user selects, by using a key, a channel that the user wants to watch. The playing device may identify an identifier of the selected program channel, and determine a media file identifier of the program channel based on a correspondence table between an identifier and a media file identifier of a program channel. Therefore, the playing device may send the identified media file identifier to a DMS function module in the communications device.

In an embodiment, the program playing request message may be carried in an HTTP request. For example, after determining the media file identifier of the program channel, the playing device may determine a URL address of the program channel based on the correspondence table, and send an HTTP request carrying the URL address to the DMS function module in the communications device, to request to access a corresponding media file.

Method 2: The user sends the program playing request message by using an application of UE.

The application of the UE may implement a function of a DMC. In an example, the UE may search for a communications device and a playing device in a same network environment by using a universal plug and play (UPNP) protocol, so that the communications device, the playing device, and the UE can communicate with each other.

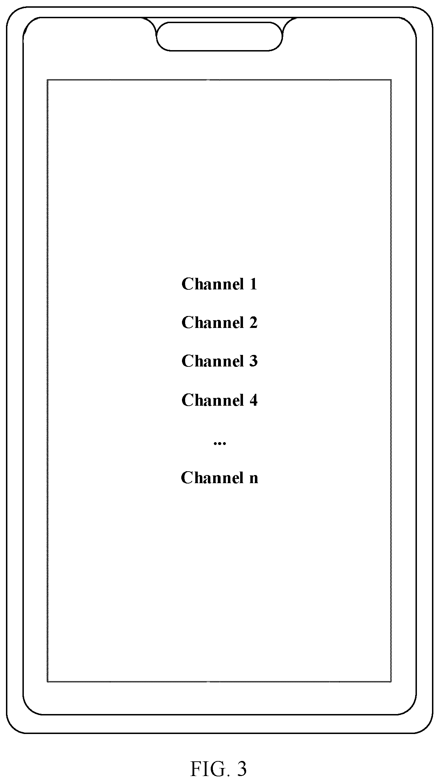

After receiving a correspondence table sent by a DMS function module, the application of the UE may display a program list shown in FIG. 3, and in this case, the user may select, by using the program list, a program that the user wants to watch. The application of the UE may identify a selected program channel, and obtain a media file identifier from the correspondence table based on an identifier of the selected program channel. The UE may send a program playing request message carrying the media file identifier to the playing device by using a UPNP message, and the playing device may send the program playing request message to the communications device.

In an embodiment, the program playing request message may be carried in an HTTP request. For example, after receiving the program playing request message, the playing device may obtain a URL address from the correspondence table. Alternatively, the UE may obtain a URL address from the correspondence table based on the identifier of the selected program channel. The UE may send the URL address to the playing device by using a UPNP message. The playing device may send an HTTP request carrying the URL address to the DMS function module in the communications device, to request to access a corresponding media file.

It should be understood that, generally, because storage of the communications device is limited, the communications device does not locally store complete media data corresponding to a program. Therefore, the media file provided in Method 1 and Method 2 may be an empty file, in other words, includes no specific media data; or the media file may be a virtual file, and there is only a media file name and an actual file does not exist locally. Media files may be in a one-to-one correspondence with media file identifiers.

Step 202: The communications device determines the corresponding target program channel based on the received media file identifier.

The communications device may determine, based on the correspondence table (Table 2), the target program channel corresponding to the media file identifier. The DMS function module may send an identifier of the target program channel to an STB function module.

Step 203: The communications device sends a data stream request message to an IPTV platform by using a second transmission protocol.

The data stream request message herein includes the identifier of the target channel, and the data stream request message is used to request the IPTV platform to send a data stream of the target program channel. The second transmission protocol may be an IPTV protocol, and the IPTV protocol may include an RTP protocol, an RTSP protocol, an IGMP protocol, or the like.

In an example, the communications device may further add a server address of the target program channel to the data stream request message, and send the data stream request message to the IPTV platform. After receiving the data stream request message, the IPTV platform may access a server of the target program channel based on the server address, obtain the data stream of the target program channel, and send the data stream to the communications device. Because a plurality of communications devices may request the data stream of the target program channel, the IPTV platform may store a list of communications devices requesting the data stream of the target program channel. For example, after receiving the data stream request message carrying the identifier of the target program channel, the IPTV platform may store, in the list of communications devices, identity information of the communications device sending the data stream request message, and send the data stream to each communications device in the list of communications devices.

In another example, the data stream request message may be an IGMP report packet. The STB function module may send the IGMP report packet to the IPTV platform. In the IGMP protocol, a server address can identify a multicast group. Members in the multicast group can receive a multicast data stream, and a device other than the members in the multicast group cannot receive the multicast data stream. Therefore, the communications device may determine a server address of the target program channel based on the correspondence table, and add the identifier and the server address of the target program channel to the report packet. After receiving the report packet, the IPTV platform may add identity information of the communications device to the members in the multicast group, and push the data stream of the target program channel to the communications device.

Step 204: The communications device receives the data stream sent by the IPTV platform by using the second transmission protocol.

Step 205: The communications device sends, by using the first transmission protocol, the data stream to the playing device for play.

In an embodiment, after receiving the data stream sent by the IPTV platform, the STB function module may establish a pipe between the STB function module and a media file of the target program channel, and transmit the data stream to the pipe. A write end of the pipe is a side on which the STB function module is connected to the pipe, and a read end of the pipe is a side on which the pipe is connected to the media file.

After receiving the data stream sent by the IPTV platform, the communications device writes the data stream to the write end of the pipe. The DMS function module may read the data stream from the read end of the pipe, and send, by using the first transmission protocol, the data stream to the playing device for play.

In an example, the playing device may decode and play the data stream. It should be understood that the playing device supporting the DLNA protocol has a decoding function.

In another example, the communications device may decode the data stream, and send data obtained after the decoding to the playing device by using the first transmission protocol. The playing device herein may not have a decoding function.

Based on the solution, because a function of a gateway and a function of accessing the IPTV platform can be implemented by using the communications device, the user does not need to separately apply for an STB terminal, so that costs of an IPTV operator and costs for subscribing to and maintaining an IPTV service by the user can be reduced.

In embodiments of this application, a program being played on a playing device may be further closed.

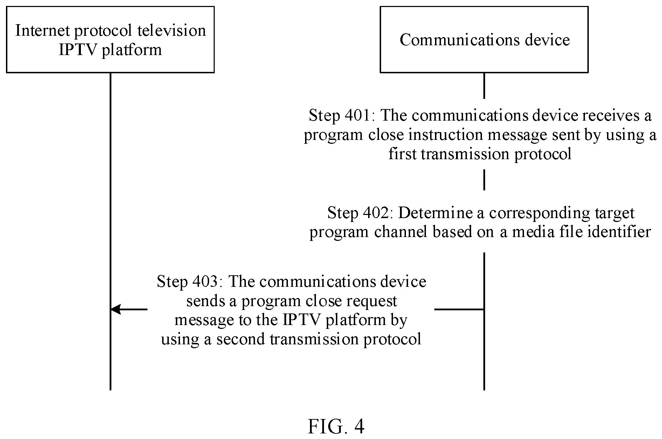

FIG. 4 is an example flowchart of a method, shown from a perspective of device interaction, for closing a program being played in an embodiment of this application. The method may include the following steps.

Step 401: A communications device receives a program close instruction message sent by using a first transmission protocol.

The program close instruction message herein may include a media file identifier associated with a target program channel that needs to be closed. For the media file identifier and the first transmission protocol, refer to related descriptions in the foregoing method embodiment. Details are not described herein again.

In this embodiment of this application, the program close instruction message may be sent in the following two manners.

Manner 1: A user sends the program close instruction message by using a playing device.

The playing device herein may be integrated with a related function of a DMC.

In an example, the user may close, by using a close key on a remote control, the target program channel being played. In this case, the remote control may send a corresponding radio frequency signal to the playing device. The playing device may identify the media file identifier of the target program channel and/or an identifier of the target program channel, add the media file identifier and/or the identifier of the target program channel to the program close instruction message, and send the program close instruction message to the communications device by using the first transmission protocol. The playing device may be further powered off based on the radio frequency signal.

Manner 2: A user sends the program close instruction message by using an application of UE.

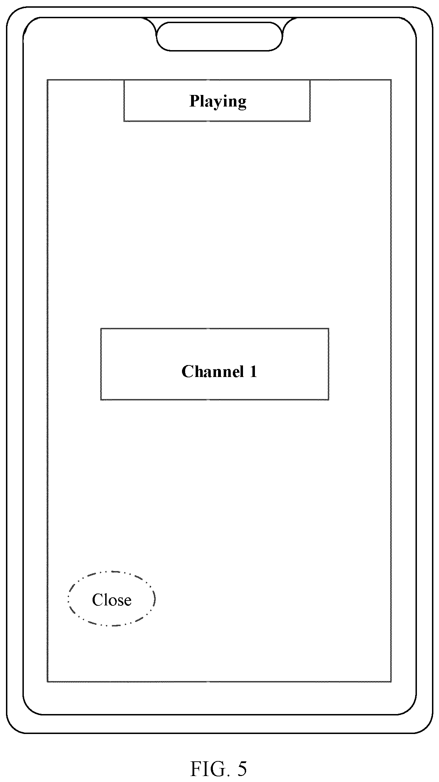

The application of the UE may implement a function of a DMC. After the user plays a selected program through step 201 to step 205, a program being played may be displayed on the UE, as shown in FIG. 5. The user closes, in the interface, the program being played. For example, the user may close, by using a close key, the program being played, or the user may double-tap or perform a slide operation on the program being played, to close the program. This is not specifically limited in this application. The UE may identify a media file identifier of the program, and therefore the UE may send the program close instruction message carrying the media file identifier to a DMS function module in the communications device by using a UPNP message.

Step 402: Determine the corresponding target program channel based on the media file identifier.

The communications device herein may determine, based on a correspondence table between an identifier and a media file identifier of a program channel, the target program channel corresponding to the media file identifier. The communications device may further determine a server address of the target program channel based on the correspondence table.

Step 403: The communications device sends a program close request message to an IPTV platform by using a second transmission protocol.

The communications device may add the identifier of the target program channel to the program close request message, and send the program close request message to the IPTV platform. After receiving the program close request message, the IPTV platform may delete identity information of the communications device from a list of communications devices of the target program channel. In this case, the IPTV platform no longer sends a data stream of the target program channel to the communications device.

In an example, the program close request message may be an IGMP leave packet. An STB function module may add the identifier of the target program channel and the server address of the target program channel to the leave packet. After receiving the IGMP leave packet sent by the STB function module, the IPTV platform may delete the identity information of the communications device from a multicast group identified by the server address, so that the IPTV platform no longer sends the data stream of the target program channel to the communications device.

The STB function module in the communications device may also stop transmitting the data stream to a write end of a pipe between the STB function module and a media file of the target program channel, and the DMS function module may stop reading the data stream from a read end of the pipe.

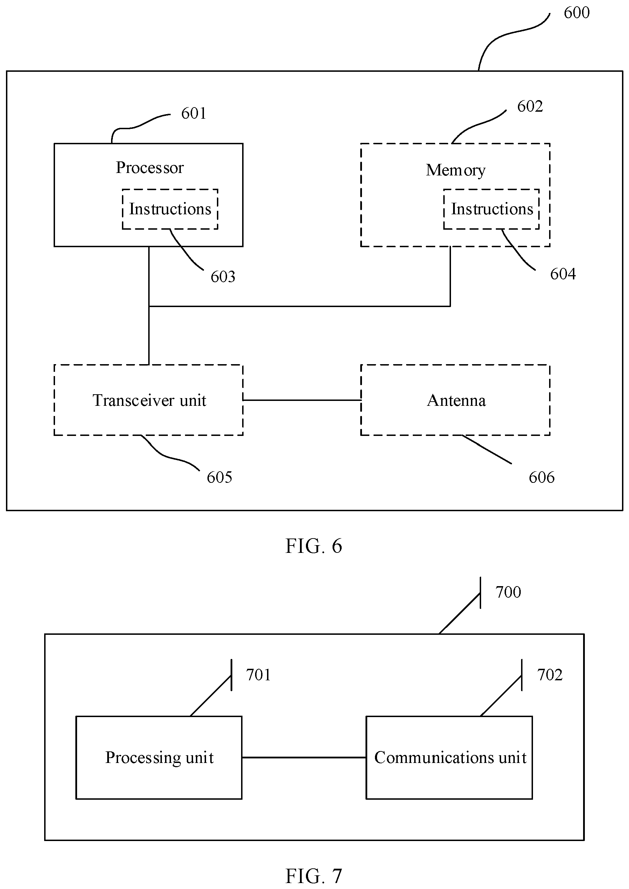

The foregoing describes in detail the program playing method in embodiment of this application with reference to FIG. 1 to FIG. 5. The following describes in detail a program playing apparatus in embodiment of this application with reference to FIG. 6 and FIG. 7.

A program playing apparatus 600 includes one or more processors 601, and the one or more processors 601 may implement the method in the embodiment shown in FIG. 2 or FIG. 4.

In a possible design, the program playing apparatus 600 includes a means configured to determine a corresponding target program channel based on a media file identifier. For the media file identifier and the target program channel, refer to related descriptions in the foregoing method embodiments. For example, the target program channel may be determined by using one or more processors. Optionally, the processor 601 may implement another function in addition to implementing the method in the embodiment shown in FIG. 2 or FIG. 4.

Optionally, in a design, the processor 601 may execute instructions 603, so that the program playing apparatus 600 performs the method described in the foregoing method embodiment. All or some of the instructions may be stored in the processor, or may be stored in a memory 602 coupled to the processor.

In another possible design, the program playing apparatus 600 may further include a circuit, and the circuit may implement the functions in the foregoing method embodiment.

In still another possible design, the program playing apparatus 600 may include one or more memories 602. The one or more memories 602 store instructions 604, and the instructions may run on the processor, so that the program playing apparatus 600 performs the method described in the foregoing method embodiment. Optionally, the memory may further store data. Optionally, the processor may also store instructions and/or data. For example, the one or more memories 602 may store the channel information list described in the foregoing embodiment. The processor and the memory may be separately disposed, or may be integrated together.

In yet another possible design, the program playing apparatus 600 may further include a transceiver unit 605 and an antenna 606. The processor 601 may be referred to as a processing unit, and controls the program playing apparatus. The transceiver unit 605 may be referred to as a transceiver, a transceiver circuit, or the like, and is configured to implement a transceiver function of the program playing apparatus by using the antenna 606.

In a possible implementation, a program playing apparatus 700 shown in FIG. 7 may be used as the communications device in the foregoing method embodiment, and perform the steps performed by the communications device in the foregoing method embodiment. As shown in FIG. 7, the program playing apparatus 700 may include a processing unit 701 and a communications unit 702, and the processing unit 701 and the communications unit 702 are mutually coupled. The processing unit 701 may be configured to support the program playing apparatus 700 in performing a processing action in the foregoing method embodiment.

When actions performed by the program playing apparatus in the foregoing method embodiments are performed, the communications unit 702 may be configured to receive a program playing request message sent by using a first transmission protocol; or may be configured to send a data stream request message to an IPTV platform by using a second transmission protocol; or may be configured to: receive a data stream sent by an IPTV platform by using a second transmission protocol, and send, by using a first transmission protocol, the data stream to a playing device for play. For the first transmission protocol and the second transmission protocol, refer to related descriptions in the foregoing method embodiments.

The processing unit 701 may be configured to determine a corresponding target program channel based on a media file identifier.

In a design, the communications unit 702 may be further configured to receive a channel information list sent by the IPTV platform by using the second transmission protocol. For the channel information list, refer to related descriptions in the foregoing method embodiments.

The processing unit 701 may be further configured to: add a media file identifier for an identifier of each program channel in the channel information list, and store a correspondence table between an identifier and a media file identifier of each program channel. For the channel information list, refer to related descriptions in the foregoing method embodiments.

In a design, the communications unit 702 may be further configured to receive a program close instruction message sent by using the first transmission protocol; or may be configured to send a program close request message to the IPTV platform by using the second transmission protocol. For the program close instruction message and the program close request message, refer to related descriptions in the foregoing method embodiments.

The processing unit 701 may be further configured to determine the corresponding target program channel based on the media file identifier.

One or more of the units in FIG. 7 may be implemented by software, hardware, firmware, or a combination thereof. The software or the firmware includes but is not limited to a computer program instruction or code, and may be executed by a hardware processor. The hardware includes but is not limited to a variety of integrated circuits such as a central processing unit (CPU), a digital signal processor (DSP), a field programmable gate array (FPGA), or an application-specific integrated circuit (ASIC).

It should be noted that the processor in embodiments of this application may be an integrated circuit chip, and has a signal processing capability. In an implementation process, the steps in the foregoing method embodiments may be completed by using a hardware integrated logic circuit in the processor or instructions in a form of software. The foregoing processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that, in embodiments of this application, the memory may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory in the system and the methods described in this specification aims to include but is not limited to these memories and any memory of another proper type.

An embodiment of this application further provides a computer readable medium. The computer readable medium stores a computer program, and when the computer program is executed by a computer, the program playing method in any one of the foregoing method embodiments is implemented.

An embodiment of this application further provides a computer program product. When the computer program product is executed by a computer, the program playing method in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

An embodiment of this application further provides a program playing apparatus, including a processor and an interface. The processor is configured to perform the program playing method in any one of the foregoing method embodiments.

It should be understood that the program playing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application.

## Claims

1. A program playing method, comprising:
receiving (201), by a communications device (103), a program playing request message sent by a playing device using a first transmission protocol, wherein the program playing request message comprises a media file identifier associated with a target program channel, and the first transmission protocol is a digital living network alliance, DLNA, protocol;
determining (202), by the communications device (103), the corresponding target program channel based on the media file identifier;
sending (203), by the communications device (103), a data stream request message to an IPTV platform (101) by using a second transmission protocol, wherein the data stream request message comprises an identifier of the target program channel, and is used to request the IPTV platform (101) to send a data stream of the target program channel, and the second transmission protocol is an internet protocol television, IPTV, protocol;
receiving (204), by the communications device (103), the data stream sent by the IPTV platform (101) by using the second transmission protocol; and
sending (205), by the communications device (103), by using the first transmission protocol, the data stream to a playing device (102) for play;
wherein before the media file identifier is received, the method further comprises:
receiving, by the communications device, a channel information list sent by the IPTV platform (101) by using the second transmission protocol, wherein the channel information list comprises identifiers of at least two program channels and corresponding server addresses of the program channels;
adding a media file identifier for an identifier of each program channel in the channel information list and creating and storing a media file corresponding to the media file identifier;
creating and storing a correspondence table including the identifier of each program channel, the server address, a URL address for accessing the media file, and the media file identifier of each program channel; and
sending the correspondence table to the playing device.

2. The method according to claim 1, wherein the correspondence table also comprises the server addresses of the program channels; and the data stream request message comprises a server address of the target program channel, so that the IPTV platform (101) accesses the server address, and obtains the data stream.

3. The method according to any one of claims 1 to 2, wherein after the sending, by using the first transmission protocol, the data stream to a playing device (102) for play, the method further comprises:
receiving a program close instruction message sent by using the first transmission protocol, wherein the program close instruction message comprises the media file identifier associated with the target program channel that needs to be closed;
determining the corresponding target program channel based on the media file identifier; and
sending a program close request message to the IPTV platform (101) by using the second transmission protocol, wherein the program close request message comprises the identifier of the target program channel, and is used to request to leave a multicast group of the data stream of the target program channel.

4. The method according to any one of claims 1 to 3, wherein the second transmission protocol comprises an internet group management protocol, IGMP, protocol.

5. A program playing apparatus (600, 700), comprising:
a communications unit (702), configured to receive a program playing request message sent by a playing device using a first transmission protocol, wherein the program playing request message comprises a media file identifier associated with a target program channel, and the first transmission protocol is a digital living network alliance, DLNA, protocol; and
a processing unit (701), configured to determine the corresponding target program channel based on the media file identifier, wherein
the communications unit (702) is further configured to: send a data stream request message to an IPTV platform (101) by using a second transmission protocol, wherein the data stream request message comprises an identifier of the target program channel, and is used to request the IPTV platform (101) to send a data stream of the target program channel, and the second transmission protocol is an internet protocol television, IPTV, protocol; receive the data stream sent by the IPTV platform (101) by using the second transmission protocol; and send, by using the first transmission protocol, the data stream to a playing device (102) for play;
wherein before the media file identifier is received, the communications unit (702) is further configured to:
receive a channel information list sent by the IPTV platform (101) by using the second transmission protocol, wherein the channel information list comprises identifiers of at least two program channels and corresponding server addresses of the program channels; and
the processing unit (701) is further configured to: add a media file identifier for an identifier of each program channel in the channel information list and create and store a media file corresponding to the media file identifier; and create and store a correspondence table including the identifier of each program channel, the server address, a URL address for accessing the media file, and the media file identifier of each program channel; and send the correspondence table to the playing device.

6. The apparatus according to claim 5, wherein the correspondence table also comprises the server addresses of the program channels; and the data stream request message comprises a server address of the target program channel, so that the IPTV platform (101) accesses the server address, and obtains the data stream.

7. The apparatus according to any one of claims 5 to 6, wherein after the data stream is sent, by using the first transmission protocol, to the playing device (102) for play, the communications unit (702) is further configured to:
receive a program close instruction message sent by using the first transmission protocol, wherein the program close instruction message comprises the media file identifier associated with the target program channel that needs to be closed;
the processing unit (701) is further configured to determine the corresponding target program channel based on the media file identifier; and
the communications unit (702) is further configured to send a program close request message to the IPTV platform (101) by using the second transmission protocol, wherein the program close request message comprises the identifier of the target program channel, and is used to request to leave a multicast group of the data stream of the target program channel.

8. The apparatus according to any one of claims 5 to 7, wherein the second transmission protocol comprises an internet group management protocol, IGMP, protocol.

9. A computer-readable storage medium, wherein the computer-readable storage medium stores computer-executable instructions, and the computer-executable instructions are used to enable a computer to perform the method according to any one of claims 1 to 4.

10. A computer program product, comprising computer-executable instructions, wherein the computer-executable instructions are used to enable a computer to perform the method according to any one of claims 1 to 4.

## Patentansprüche

1. Programmwiedergabeverfahren, umfassend:
Empfangen (201) einer Anforderungsnachricht zur Programmwiedergabe, die durch eine Wiedergabevorrichtung gesendet wird, durch eine Kommunikationsvorrichtung (103) unter Verwendung eines ersten Übertragungsprotokolls, wobei die Anforderungsnachricht zur Programmwiedergabe eine Mediendateikennung umfasst, die mit einem Zielprogrammkanal assoziiert ist, und das erste Übertragungsprotokoll ein Digital Living Network Alliance-Protokoll, DLNA-Protokoll, ist;
Bestimmen (202) des entsprechenden Zielprogrammkanals durch die Kommunikationsvorrichtung (103) basierend auf der Mediendateikennung;
Senden (203) einer Nachricht zur Datenstromanforderung durch die Kommunikationsvorrichtung (103) an eine IPTV-Plattform (101) unter Verwendung eines zweiten Übertragungsprotokolls, wobei die Nachricht zur Datenstromanforderung eine Kennung des Zielprogrammkanals umfasst und verwendet wird, um anzufordern, dass die IPTV-Plattform (101) einen Datenstrom des Zielprogrammkanals sendet, und das zweite Übertragungsprotokoll ein Internet Protocol Television-Protokoll, IPTV-Protokoll, ist;
Empfangen (204) des durch die IPTV-Plattform (101) gesendeten Datenstroms durch die Kommunikationsvorrichtung (103) unter Verwendung des zweiten Übertragungsprotokolls; und
Senden (205) des Datenstroms durch die Kommunikationsvorrichtung (103) unter Verwendung des ersten Übertragungsprotokolls zur Wiedergabe an eine Wiedergabevorrichtung (102);
wobei das Verfahren vor dem Empfangen der Mediendateikennung ferner Folgendes umfasst:
Empfangen einer durch die IPTV-Plattform (101) gesendeten Kanalinformationsliste durch die Kommunikationsvorrichtung unter Verwendung des zweiten Übertragungsprotokolls, wobei die Kanalinformationsliste Kennungen von mindestens zwei Programmkanälen und entsprechende Serveradressen der Programmkanäle umfasst;
Hinzufügen einer Mediendateikennung für eine Kennung jedes Programmkanals in der Kanalinformationsliste und Erstellen und Speichern einer Mediendatei entsprechend der Mediendateikennung;
Erstellen und Speichern einer Entsprechungstabelle, welche die Kennung jedes Programmkanals, die Serveradresse, eine URL-Adresse zum Zugreifen auf die Mediendatei und die Mediendateikennung jedes Programmkanals beinhaltet; und
Senden der Entsprechungstabelle an die Wiedergabevorrichtung.

2. Verfahren nach Anspruch 1, wobei die Entsprechungstabelle auch die Serveradressen der Programmkanäle umfasst; und die Nachricht zur Datenstromanforderung eine Serveradresse des Zielprogrammkanals umfasst, sodass die IPTV-Plattform (101) auf die Serveradresse zugreift und den Datenstrom erlangt.

3. Verfahren nach einem der Ansprüche 1 bis 2, wobei das Verfahren nach dem Senden des Datenstroms zur Wiedergabe an eine Wiedergabevorrichtung (102) unter Verwendung des ersten Übertragungsprotokolls ferner Folgendes umfasst:
Empfangen einer unter Verwendung des ersten Übertragungsprotokolls gesendeten Nachricht zur Anweisung des Schließens des Programms, wobei die Nachricht zur Anweisung des Schließens des Programms die Mediendateikennung umfasst, die mit dem Zielprogrammkanal assoziiert ist, welche zu schließen ist;
Bestimmen des entsprechenden Zielprogrammkanals basierend auf der Mediendateikennung; und
Senden einer Nachricht zur Anforderung des Schließens des Programms an die IPTV-Plattform (101) unter Verwendung des zweiten Übertragungsprotokolls, wobei die Nachricht zur Anforderung des Schließens des Programms die Kennung des Zielprogrammkanals umfasst und zum Anfordern des Verlassens einer Multicast-Gruppe des Datenstroms des Zielprogrammkanals verwendet wird.

4. Verfahren nach einem der Ansprüche 1 bis 3, wobei das zweite Übertragungsprotokoll ein Internet Group Management Protocol-Protokoll, IGMP-Protokoll, umfasst.

5. Programmwiedergabeeinrichtung (600, 700), umfassend:
eine Kommunikationseinheit (702), die dazu konfiguriert ist, eine Anforderungsnachricht zur Programmwiedergabe, die durch eine Wiedergabevorrichtung gesendet wird, unter Verwendung eines ersten Übertragungsprotokolls zu empfangen, wobei die Anforderungsnachricht zur Programmwiedergabe eine Mediendateikennung umfasst, die mit einem Zielprogrammkanal assoziiert ist, und das erste Übertragungsprotokoll ein Digital Living Network Alliance-Protokoll, DLNA-Protokoll, ist; und
eine Verarbeitungseinheit (701), die dazu konfiguriert ist, den entsprechenden Zielprogrammkanal basierend auf der Mediendateikennung zu bestimmen, wobei
die Kommunikationseinheit (702) ferner dazu konfiguriert ist:
eine Nachricht zur Datenstromanforderung unter Verwendung eines zweiten Übertragungsprotokolls an eine IPTV-Plattform (101) zu senden, wobei die Nachricht zur Datenstromanforderung eine Kennung des Zielprogrammkanals umfasst und verwendet wird, um anzufordern, dass die IPTV-Plattform (101) einen Datenstrom des Zielprogrammkanals sendet, und das zweite Übertragungsprotokoll ein Internet Protocol Television-Protokoll, IPTV-Protokoll, ist; den durch die IPTV-Plattform (101) gesendeten Datenstrom unter Verwendung des zweiten Übertragungsprotokolls zu empfangen; und den Datenstrom unter Verwendung des ersten Übertragungsprotokolls zur Wiedergabe an eine Wiedergabevorrichtung (102) zu senden;
wobei die Kommunikationseinheit (702) vor dem Empfangen der Mediendateikennung ferner dazu konfiguriert ist:
eine durch die IPTV-Plattform (101) gesendete Kanalinformationsliste unter Verwendung des zweiten Übertragungsprotokolls zu empfangen, wobei die Kanalinformationsliste Kennungen von mindestens zwei Programmkanälen und entsprechende Serveradressen der Programmkanäle umfasst; und
die Verarbeitungseinheit (701) ferner dazu konfiguriert ist: einer Kennung jedes Programmkanals in der Kanalinformationsliste eine Mediendateikennung hinzuzufügen und eine Mediendatei entsprechend der Kennung der Mediendatei zu erstellen und zu speichern; und eine Entsprechungstabelle zu erstellen und zu speichern, welche die Kennung jedes Programmkanals, die Serveradresse, eine URL-Adresse zum Zugreifen auf die Mediendatei und die Mediendateikennung jedes Programmkanals beinhaltet; und die Entsprechungstabelle an die Wiedergabevorrichtung zu senden.

6. Einrichtung nach Anspruch 5, wobei die Entsprechungstabelle auch die Serveradressen der Programmkanäle umfasst; und die Nachricht zur Datenstromanforderung eine Serveradresse des Zielprogrammkanals umfasst, sodass die IPTV-Plattform (101) auf die Serveradresse zugreift und den Datenstrom erlangt.

7. Einrichtung nach einem der Ansprüche 5 bis 6, wobei die Kommunikationseinheit (702) nach dem Senden des Datenstroms unter Verwendung des ersten Übertragungsprotokolls zur Wiedergabe an die Wiedergebevorrichtung (102) ferner dazu konfiguriert ist:
eine unter Verwendung des ersten Übertragungsprotokolls gesendete Nachricht zur Anweisung des Schließens des Programms zu empfangen, wobei die Nachricht zur Anweisung des Schließens des Programms die Mediendateikennung umfasst, die mit dem Zielprogrammkanal assoziiert ist, welche zu schließen ist;
die Verarbeitungseinheit (701) ferner dazu konfiguriert ist, den entsprechenden Zielprogrammkanal basierend auf der Mediendateikennung zu bestimmen; und
die Kommunikationseinheit (702) ferner dazu konfiguriert ist, eine Nachricht zur Anforderung des Schließens des Programms unter Verwendung des zweiten Übertragungsprotokolls an die IPTV-Plattform (101) zu senden, wobei die Nachricht zur Anforderung des Schließens des Programms die Kennung des Zielprogrammkanals umfasst und zum Anfordern des Verlassens einer Multicast-Gruppe des Datenstroms des Zielprogrammkanals verwendet wird.

8. Einrichtung nach einem der Ansprüche 5 bis 7, wobei das zweite Übertragungsprotokoll ein Internet Group Management Protocol-Protokoll, IGMP-Protokoll, umfasst.

9. Computerlesbares Speichermedium, wobei das computerlesbare Speichermedium computerausführbare Anweisungen speichert, und die computerausführbaren Anweisungen verwendet werden, um einen Computer in die Lage zu versetzen, das Verfahren nach einem der Ansprüche 1 bis 4 durchzuführen.

10. Computerprogrammprodukt, umfassend computerausführbare Anweisungen, wobei die computerausführbaren Anweisungen verwendet werden, um einen Computer in die Lage zu versetzen, das Verfahren nach einem der Ansprüche 1 bis 4 durchzuführen.

## Revendications

1. Procédé de lecture de programme, comprenant :
la réception (201), par un dispositif de communications (103), d'un message de demande de lecture de programme envoyé par un dispositif de lecture à l'aide d'un premier protocole de transmission, dans lequel le message de demande de lecture de programme comprend un identifiant de fichier multimédia associé à un canal de programme cible, et le premier protocole de transmission est un protocole d'alliance de réseau vivant numérique, DLNA ;
la détermination (202), par le dispositif de communications (103), du canal de programme cible correspondant sur la base de l'identifiant de fichier multimédia ;
l'envoi (203), par le dispositif de communications (103), d'un message de demande de flux de données à une plateforme IPTV (101) en utilisant un second protocole de transmission, dans lequel le message de demande de flux de données comprend un identifiant du canal de programme cible, et est utilisé pour demander à la plateforme IPTV (101) d'envoyer un flux de données du canal de programme cible, et le second protocole de transmission est un protocole de télévision sur protocole Internet, IPTV ;
la réception (204), par le dispositif de communications (103), du flux de données envoyé par la plateforme IPTV (101) en utilisant le second protocole de transmission ; et
l'envoi (205), par le dispositif de communications (103), en utilisant le premier protocole de transmission, du flux de données à un dispositif de lecture (102) pour lecture ;
dans lequel avant que l'identifiant de fichier multimédia ne soit reçu, le procédé comprend également :
la réception, par le dispositif de communications, d'une liste d'informations de canal envoyée par la plateforme IPTV (101) en utilisant le second protocole de transmission, dans lequel la liste d'informations de canal comprend des identifiants d'au moins deux canaux de programme et d'adresses de serveur correspondantes des canaux de programme ;
l'ajout d'un identifiant de fichier multimédia pour un identifiant de chaque canal de programme dans la liste d'informations de canal et la création et le stockage d'un fichier multimédia correspondant à l'identifiant de fichier multimédia ;
la création et le stockage d'une table de correspondance comportant l'identifiant de chaque canal de programme, l'adresse du serveur, une adresse URL pour accéder au fichier multimédia, et l'identifiant de fichier multimédia de chaque canal de programme ; et
l'envoi de la table de correspondance à l'appareil de lecture.

2. Procédé selon la revendication 1, dans lequel la table de correspondance comprend aussi les adresses de serveur des canaux de programme ; et le message de demande de flux de données comprend une adresse de serveur du canal de programme cible, de sorte que la plateforme IPTV (101) accède à l'adresse de serveur et obtient le flux de données.

3. Procédé selon l'une quelconque des revendications 1 et 2, dans lequel après l'envoi, en utilisant le premier protocole de transmission, du flux de données à un dispositif de lecture (102) pour lecture, le procédé comprend également :
la réception d'un message d'instruction de fermeture de programme envoyé en utilisant le premier protocole de transmission, dans lequel le message d'instruction de fermeture de programme comprend l'identifiant de fichier multimédia associé au canal de programme cible qui doit être fermé ;
la détermination du canal de programme cible correspondant sur la base de l'identifiant de fichier multimédia ; et
l'envoi d'un message de demande de fermeture de programme à la plateforme IPTV (101) en utilisant le second protocole de transmission, dans lequel le message de demande de fermeture de programme comprend l'identifiant du canal de programme cible, et est utilisé pour demander de quitter un groupe de multidiffusion du flux de données du canal de programme cible.

4. Procédé selon l'une quelconque des revendications 1 à 3, dans lequel le second protocole de transmission comprend un protocole de protocole de gestion de groupe Internet, IGMP.

5. Appareil de lecture de programme (600, 700), comprenant :
une unité de communications (702), configurée pour recevoir un message de demande de lecture de programme envoyé par un dispositif de lecture à l'aide d'un premier protocole de transmission, dans lequel le message de demande de lecture de programme comprend un identifiant de fichier multimédia associé à un canal de programme cible, et le premier protocole de transmission est un protocole d'alliance de réseau vivant numérique, DLNA ; et
une unité de traitement (701), configurée pour déterminer le canal de programme cible correspondant sur la base de l'identifiant de fichier multimédia, dans lequel
l'unité de communications (702) est également configurée pour :
envoyer un message de demande de flux de données à une plateforme IPTV (101) en utilisant un second protocole de transmission, dans lequel le message de demande de flux de données comprend un identifiant du canal de programme cible, et est utilisé pour demander à la plateforme IPTV (101) d'envoyer un flux de données du canal de programme cible, et le second protocole de transmission est un protocole de télévision sur protocole Internet, IPTV ; recevoir le flux de données envoyé par la plateforme IPTV (101) en utilisant le second protocole de transmission ; et envoyer, en utilisant le premier protocole de transmission, le flux de données à un dispositif de lecture (102) pour lecture ;
dans lequel avant que l'identifiant de fichier multimédia ne soit reçu, l'unité de communications (702) est également configurée pour :
recevoir une liste d'informations de canal envoyée par la plateforme IPTV (101) en utilisant le second protocole de transmission, dans lequel la liste d'informations de canal comprend des identifiants d'au moins deux canaux de programme et d'adresses de serveur correspondantes des canaux de programme ; et
l'unité de traitement (701) est également configurée pour : ajouter un identifiant de fichier multimédia pour un identifiant de chaque canal de programme dans la liste d'informations de canal et créer et stocker un fichier multimédia correspondant à l'identifiant de fichier multimédia ; et créer et stocker une table de correspondance comportant l'identifiant de chaque canal de programme, l'adresse du serveur, une adresse URL pour accéder au fichier multimédia, et l'identifiant de fichier multimédia de chaque canal de programme ; et envoyer la table de correspondance au dispositif de lecture.

6. Procédé selon la revendication 5, dans lequel la table de correspondance comprend aussi les adresses de serveur des canaux de programme ; et le message de demande de flux de données comprend une adresse de serveur du canal de programme cible, de sorte que la plateforme IPTV (101) accède à l'adresse de serveur, et obtient le flux de données.

7. Appareil selon l'une quelconque des revendications 5 et 6, dans lequel après l'envoi du flux de données, en utilisant le premier protocole de transmission, au dispositif de lecture (102) pour lecture, l'unité de communications (702) est également configurée pour :
recevoir un message d'instruction de fermeture de programme envoyé en utilisant le premier protocole de transmission, dans lequel le message d'instruction de fermeture de programme comprend l'identifiant de fichier multimédia associé au canal de programme cible qui doit être fermé ;
l'unité de traitement (701) est également configurée pour déterminer le canal de programme cible correspondant sur la base de l'identifiant de fichier multimédia ; et
l'unité de communications (702) est également configurée pour envoyer un message de demande de fermeture de programme à la plateforme IPTV (101) en utilisant le second protocole de transmission, dans lequel le message de demande de fermeture de programme comprend l'identifiant du canal de programme cible, et est utilisé pour demander de quitter un groupe de multidiffusion du flux de données du canal de programme cible.

8. Procédé selon l'une quelconque des revendications 5 à 7, dans lequel le second protocole de transmission comprend un protocole de protocole de gestion de groupe Internet, IGMP.

9. Support de stockage lisible par ordinateur, dans lequel le support de stockage lisible par ordinateur stocke des instructions exécutables par ordinateur, et les instructions exécutables par ordinateur sont utilisées pour activer un ordinateur pour réaliser le procédé selon l'une quelconque des revendications 1 à 4.

10. Produit de programme informatique, comprenant des instructions exécutables par ordinateur, dans lequel lorsque les instructions exécutables par ordinateur sont utilisées pour activer un ordinateur pour réaliser le procédé selon l'une quelconque des revendications 1 à 4.
